# EUROPEAN PATENT APPLICATION

(11) **EP 2 543 292 A1**
(43) Date of publication of application: **09.01.2013**
(21) Application number: 12161638.7
(22) Date of filing: 28.03.2012
(51) Int. Cl.: A47J 39/02, A47J 47/14, B65D 81/38

(54) **Thermal food container and relative metod of manufacture**

(30) Priority: 06.07.2011 IT BS20110099
(71) Applicant: Ater S.r.l., 20020 Lainate (MI) (IT)
(72) Inventor: Terracciano, Simone, I-20020 Lainate (MI) (IT)
(74) Representative: Mitola, Marco

(57) **Abstract**

Thermal food container (4) comprising an outer body (8), at least two trays (12) for containing foods, said trays (12) being separated from each other and being contained inside the outer body (8), an outer closure lid (16) detachably associable with the outer body (8), a thermally insulating element (14) positioned between the trays (12) and the outer body (8). Advantageously, the trays (12) are over moulded with a joining ring (20) which joins them to each other, keeping them separate at the point of at least one separation septum (24). Furthermore, the joining ring (20), joining the trays (12), is welded and/or glued to the outer body (8) after interposition of said insulating element (14), so as to form a hermetic joint between the joining ring (20) and the outer body (8).

## Description

The present invention concerns a thermal food container and the relative method of manufacture.

Thermal containers are known in the art, in particular for foods, having at least one tray, thermally insulated, so as to store foods inside, while keeping the temperature as constant as possible.

The solutions of the known art do have a number of drawbacks.

For example, the containers of known art do not allow effectively storing foods at different temperatures inside specific separate inner compartments.

In other words, the known containers comprise a single inner food housing and storage compartment; solutions also exist of containers having two food housing compartments, separate the one from the other: such compartments are not however effectively insulated the one from the other and do not therefore allow storing foods at different temperatures, e.g., hot foods and cold foods, so as to maintain such temperature differences over time.

Furthermore, the solutions of known art, even when they manage to ensure sufficient insulation between the trays or the inner housing compartments, do not permit completely washing the container, e.g., in dishwashers, considering the trays are not hermetically sealed. Consequently, following washing in a dishwasher for example or in water bath for example, water infiltrations would occur which, in time, would cause bacterial proliferations and end up by deteriorating the inner insulation lining between the inner trays and the outer body of the container.

Furthermore, the known-art containers are complicated and costly to make.

The object of the present invention is to make a thermal food container that overcomes the mentioned drawbacks with reference to the state of the art.

Such drawbacks and limitations are solved by a thermal food container in agreement with claim 1 and by a relative method of manufacture according to claim 14.

Other embodiments of the present invention are described in the following claims.

Further characteristics and the advantages of the present invention will be made clearer by the following description of its preferred and non-limitative embodiments, wherein:

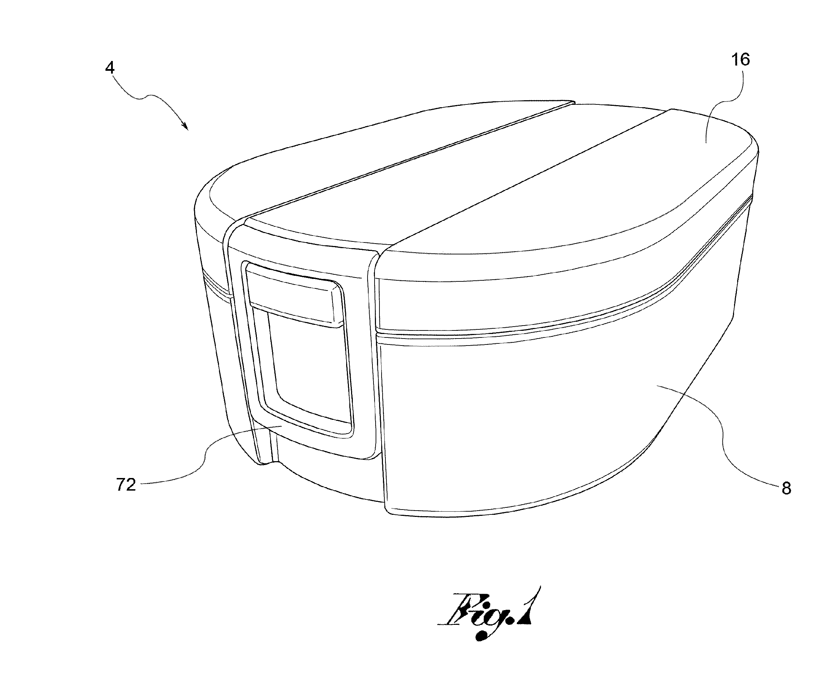

the figure 1 represents a perspective view, in assembly configuration, of a container in agreement with the present invention;

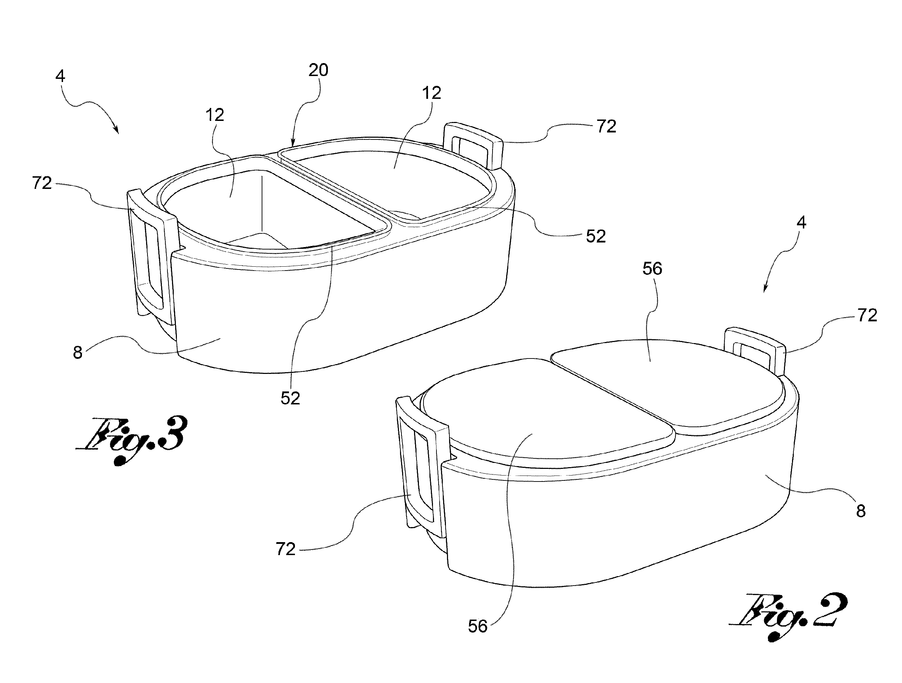

the figures 2-3 represent perspective views of the container in figure 1, wherein a number of elements have been removed to allow a partial view of the inside of the container;

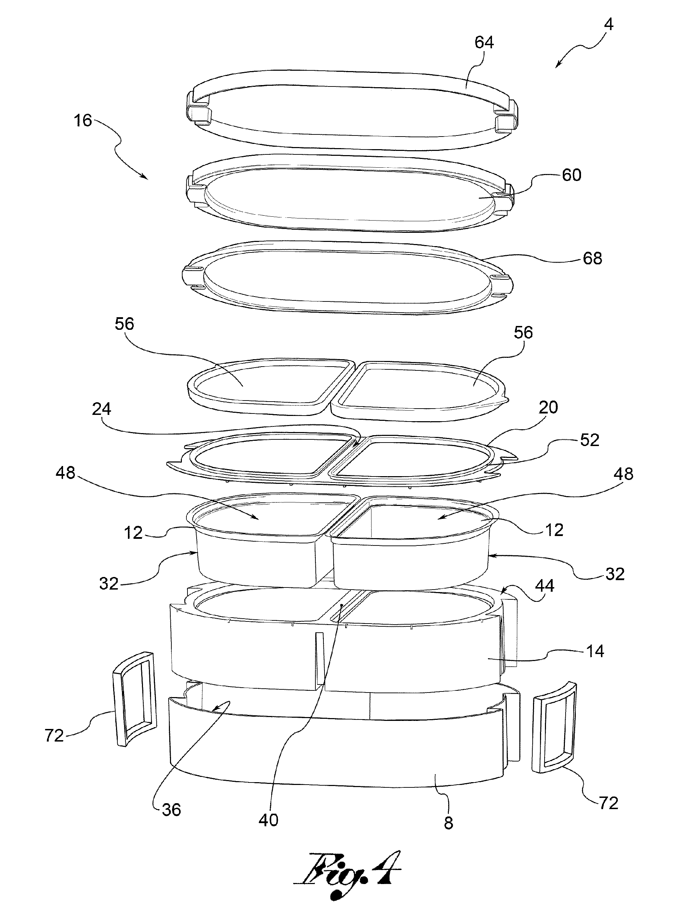

the figure 4 represents a perspective view, with separated parts, of the container of figure 1;

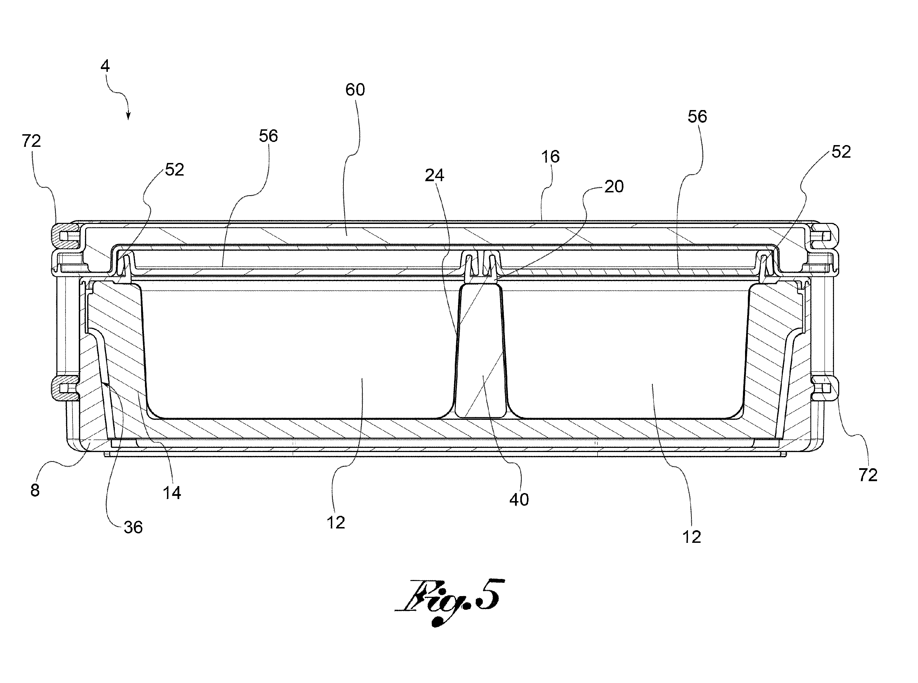

the figure 5 represents a section view of the container of figure 1;

the figures 6a and 6b represent a plan view and a section view respectively of a lid of the container according to a further embodiment of the present invention.

The elements or parts of elements in common between the embodiments described below will be indicated with the same numeric references.

With reference to the above figures, by 4 has been globally indicated a thermal food container, i.e., a container suitable for containing foods and having opportune insulation to keep the temperature of the foods contained inside it as constant as possible.

The container 4 comprises an outer body 8 which can have any shape and size; preferably, said outer body 8 is made of polystyrene, but can also be made of ABS or other similar plastic materials.

The outer body 8 contains at least two trays 12 for containing foods, said trays 12 being separated the one from the other: in other words, the trays are made separately the one from the other and do not communicate with one another, so they can contain foods separated the one from the other without these being able to come into contact and mix together.

Obviously, more trays 12 can be provided inside the container 4; the trays 12 can also contemplate inside compartments allowing further subdivisions for the foods or also, for example, the possibility of collocating cutlery, pots and pans or accessories in general.

Preferably, the trays 12 are made of steel, e.g., stainless steel, or other materials suitable for coming into contact with the foods, e.g., in plastic for foods.

The container 4 also comprises an insulating element 14, arranged between the trays 12 and the outer body 8 and an outer closure lid 16, detachably associable with the outer body 8, as better described below.

Advantageously, the trays 12 are over moulded with a joining ring 20 which joins them together, keeping them separated at the point of at least one separation septum 24.

Both the trays 12 and the joining ring 20 can also be made in a single piece moulding; in this case, the moulding will be preferably in plastic, i.e., in a plastic suitable for foods.

The joining ring 20 is preferably made of polystyrene or other plastic material compatible with the material of the outer body 8 so it can be easily welded and/or glued to said outer body 8.

For example, said welding between the joining ring 20 and the outer body 8 can be done by ultrasound welding. The welding can also be substituted with gluing or similar joining methods.

Following the welding between the joining ring 20 and the outer body 8 a hermetic joint is made between said elements to prevent any possible infiltration of liquid between the joining ring 20 and the outer body 8. In particular, such hermetic joint prevents any liquid from infiltrating and coming into contact with the insulating element 14 placed between the outer body 8 and the trays 12 before carrying out the welding/gluing between the joining ring 20 and the outer body 8. The creation is thus prevented of the conditions for bacterial proliferation inside the container.

The insulating element 14 is counter-shaped with respect to said trays 12 so as to, substantially fully, fill the volume between an outer wall 32 of the trays 12, which is not in contact with the foods, and an inner wall 36 of the outer body 8.

In particular, the insulating element 14 comprises at least one intermediate wall 40 which inserts into the separation septum 24 between the trays 12.

Preferably, the insulating element 14 comprises a lateral rim 44 representing a supporting element for the joining ring 20; in other words, the joining ring 20 is rested on the lateral rim 44 of the insulating element 14 before being welded directly on the outer body 8.

Preferably, both the joining ring 20 and the outer body 8 are made of polystyrene and are welded together by means of ultrasound welding. Alternatively, gluing or similar joining methods can be used.

Preferably, the joining ring 20 is over moulded with the trays 12 at the point of an access compartment 48 of each of the trays 12, so as to be substantially flush with said access compartment 48.

The joining ring 20, at the point of said access compartments 48 of the trays 12, comprises an outer perimetral rim 52 and the container 4 comprises inner closure lids 56 associable hermetically sealed with said outer perimetral rim 52, each inner lid 56 closing a relative tray 12 in an airtight manner.

For example, said inner lids 56 are made of LDPE or other similar plastic material.

Preferably, the outer lid 16 comprises at least one heat insulation layer 60, e.g., in EPS or in polyurethane foam.

Both the insulating element 14 and the heat insulation layer 60 can be made of polystyrene foam or similar plastic materials or using innovative technologies(e.g., nanotechnology). Such applications allow reducing the thickness of the insulation layers to the utmost so as to upgrade the thermal performance and the working volume for containing the foods.

According to one embodiment, the outer lid 16 comprises an outer plate 64 and an inner plate 68 welded together so as to block said heat insulation layer 60 internally.

According to one embodiment, the inner and outer plates 68,64 are made of polystyrene or ABS or other similar plastic materials and are welded directly the one to the other, e.g., by means of ultrasound welding. Alternatively, gluing or similar joining techniques can be used.

The outer lid 16 can be associated with the outer body 8 by means of the interposition of mobile handles 72 which, in a closed configuration, form a slotted mechanical block to fix the outer lid (16) to the outer body (8).

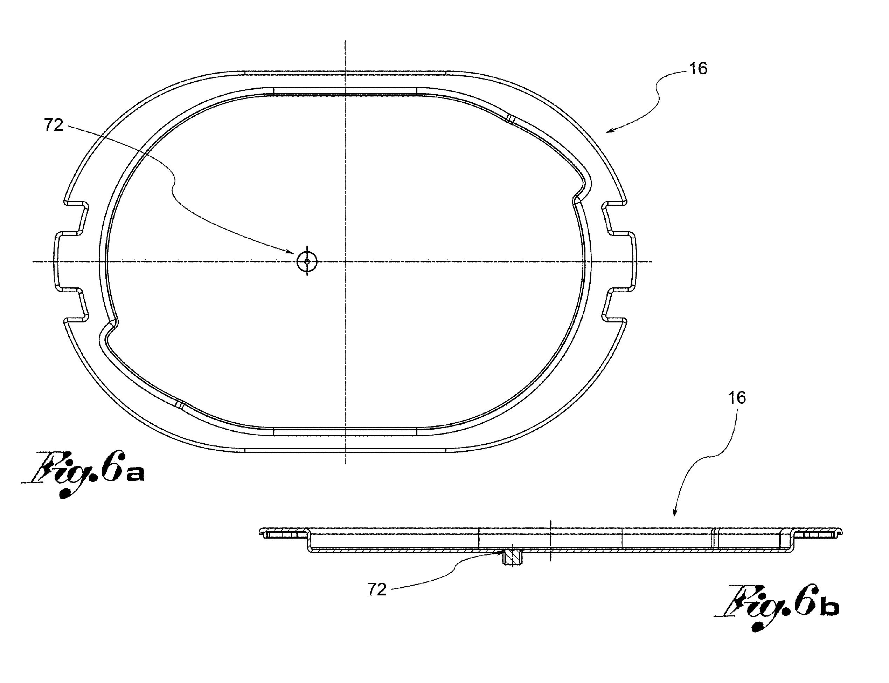

According to one possible embodiment (figures 6a and 6b) the fitting is contemplated of a valve 72 positioned both on the outer lid 16 and on the body 8 so as to allow the extraction of the air remaining inside the pieces during the assembly stage.

In particular, the valve 72, fitted to the above-mentioned pieces, during the phase of washing the containers in a dishwasher or the use of these same containers in a microwave oven, prevents the deformation of the inner and outer plastic walls of same.

The method of realization and assembly will now be described of a container according to the invention.

In particular, the outer body 8 of the container is prepared, e.g., by moulding and at least two trays 12 are prepared for containing foods, said trays 12 being separated the one from the other and being contained inside the outer body 8. The trays can for example be obtained by moulding and/or metal-plate spinning, e.g., in stainless steel.

The trays 12 are over moulded with a joining ring 20 which joins them together, keeping them separate at the point of at least one separation septum 24 and an insulating element 14 is placed between the trays 12 and the outer body 8.

The joining ring 20 is welded and/or glued to the outer body 8, e.g., by ultrasound welding, so as to make a hermetic joint between the joining ring 20 and the outer body 8. Following this welding, the insulating element 14 therefore appears closed in an airtight manner between the joining ring 20 and the outer body 8.

An outer closure lid 16 is then prepared detachably associable with the outer body 8.

Preferably, the joining ring 20 is moulded so that, at the point of access compartments 48 of the trays 12, it comprises an outer perimetral rim 52, and comprises the phase of preparing inner closure lids 56 associable in an airtight manner with said outer perimetral rim 52, each inner lid 56 closing a relative tray 12 in an airtight manner.

As can be appreciated from what has been described, the container according to the invention allows overcoming the drawbacks presented in the known art.

In particular, the container of the present invention allows effectively preserving foods at different temperatures inside specific separate inner trays.

The trays are perfectly insulated the one from the other and therefore it is also possible to preserve at the same time hot foods and cold foods without any appreciable heat exchange existing between the trays themselves.

This way it is therefore possible to effectively preserve hot foods and cold foods and maintain their temperature over time.

Furthermore, the container of the present invention has hermetically sealed inner trays: this way, the container can be completely washed, e.g., in a dishwasher, without running the risk of water infiltrations which would lead to bacterial proliferations and would end up deteriorating the inner insulation lining inserted between the inner trays and the outer body of the container.

Furthermore, the containers of known art are simple and inexpensive to make.

A technician in the field, for the purpose of catering to contingent and specific requirements, can make numerous modifications and variations to the containers and to the methods described above, all of which moreover contained within the scope of the invention as defined by the following claims.

## Claims

1. Thermal food container (4) comprising
- an outer body (8),
- at least two trays (12) for containing foods, said trays (12) being separated from each other and being contained inside the outer body (8),
- an outer closure lid (16) detachably associable with the outer body (8),
- a thermally insulating element (14) positioned between the trays (12) and the outer body (8),
**characterised by** the fact that
- the trays (12) are over moulded with a joining ring (20) or are made in a single piece mould with a joining ring (20), wherein said joining ring (20) joins the trays (12) to each other, keeping them separate at the point of at least one separation septum (24),
- said joining ring (20), joined to the trays (12), is welded and/or glued to the outer body (8) after interposition of said insulating element (14), so as to form a hermetic joint between the joining ring (20) and the outer body (8).

2. Container (4) according to claim 1, wherein the insulating element (14) is counter-shaped in relation to said trays (12) so as to comprise at least one intermediate wall (40) which inserts itself in the separation septum (24) between the trays (12).

3. Container (4) according to claim 1 or 2, wherein the insulating element (14) is counter-shaped in relation to the trays (12) and to the outer body (8) so as to completely fill the volume between the trays (12) and the outer body (8).

4. Container (4) according to any of the previous claims, wherein the insulating element (14) comprises a lateral rim (44) which constitutes a support element for the joining ring (20).

5. Container (4) according to any of the previous claims, wherein the joining ring (20) and the outer body (8) are made from polystyrene and are welded to each other by ultrasound welding.

6. Container(4) according to any of the previous claims, wherein the joining ring (20) is over moulded with the trays (12) at an access compartment (48) of each of the trays (12), so as to be substantially flush with said access compartment (48).

7. Container (4) according to claim 6, wherein the joining ring (20), at said access compartments (48) of the trays (12) comprises an outer perimetral rim (52) and the container (4) comprises inner closure lids (56) which can be associated in an airtight manner with said outer perimetral rim (52), each inner closure lid (56) closing a relative tray (12) in an airtight manner.

8. Container (4) according to any of the previous claims, wherein said inner trays (12) are made from steel or in plastic for foods.

9. Container (4) according to claim 7, wherein said inner lids (56) are made from LDPE.

10. Container (4) according to any of the previous claims, wherein the outer lid (16) comprises at least one heat insulation layer (60), for example in EPS or polyurethane foam.

11. Container (4) according to any of the previous claims, wherein the outer lid (16) comprises an outer plate (64) and an inner plate (68) welded to each other so as to block said heat insulation layer (60) internally.

12. Container (4) according to claim 11, wherein the inner and outer plates (68, 64) are made from polystyrene and are welded directly to each other, for example by ultrasound welding.

13. Container(4) according to any of the previous claims, wherein the outer lid (16) is associated with the outer body (8) by means of the interposition of mobile handles (72) which, in a closed configuration, form a slotted mechanical block to fix the outer lid (16) to the outer body (8).

14. Method of making a container (4) according to any of the previous claims, comprising the steps of:
- preparing an outer body (8) of the container (4);
- preparing at least two trays (12) for containing foods, said trays (12) being separated from each other and being contained inside the outer body (8),
- over moulding the trays (12) with a joining ring (20) or moulding the trays in a single mould with a joining ring (20) wherein said joining ring joins the trays (12) together, keeping them separate at the point of at least one separation septum (24),
- interposing an insulating element (14) between the trays (12) and the outer body (8),
- welding and/or gluing said joining ring (20), to the outer body (8) so as to form a hermetic joint between the joining ring (20) and the outer body (8),
- preparing an outer closure lid (16) detachably associable with the outer body (8).

15. Method according to claim 14, comprising the step of moulding the joining ring (20) so that at said access compartments (48) of the trays (12), it comprises an outer perimetral rim (52), and comprising the step of preparing inner closure lids (56) which can be associated in an airtight manner with said outer perimetral rim (52), each inner closure lid (56) closing a relative tray (12) in an airtight manner.
